# EUROPEAN PATENT SPECIFICATION

(11) **EP 0 825 362 B1**
(45) Date of publication and mention of the grant of the patent: **20.11.2002**
(21) Application number: 97114507.3
(22) Date of filing: 21.08.1997
(51) Int. Cl.: F16H 48/26

(54) **Traction distributing devices for motor vehicles**
Zugkraftverteiler für Kraftfahrzeuge
Dispositifs de répartition de forces de traction pour véhicules automobiles

(30) Priority: 22.08.1996 JP 22109296; 11.09.1996 JP 24065196; 13.05.1997 JP 12204797; 29.05.1997 JP 13975597
(43) Date of publication of application: 25.02.1998
(73) Proprietor: UNISIA JECS CORPORATION, Atsugi-shi, Kanagawa-ken 243-8510 (JP)
(72) Inventor: Fukushima, Naoto, Atsugi-shi, Kanagawa 243 (JP); Mochizuki, Teruhiko, Atsugi-shi, Kanagawa 243 (JP)
(74) Representative: Grünecker, Kinkeldey, Stockmair & Schwanhäusser Anwaltssozietät

(56) References cited:
- EP-A- 0 496 469
- WO-A-93/19310
- DE-C- 931 633
- US-A- 4 974 471
- US-A- 5 127 888
- PATENT ABSTRACTS OF JAPAN vol. 016, no. 290 (M-1272), 26 June 1992 (1992-06-26) -& JP 04 078351 A (YUSHI HAYASHI), 12 March 1992 (1992-03-12)

## Description

### BACKGROUND OF THE INVENTION

The present invention relates to traction distribution device for motor vehicles, which enable active control of the rate of distribution of traction with regard to right- and left-wheel shafts. In particular, it relates to a traction distribution device for a motor vehicle with a differential-gear mechanism for transmitting torque of a turnable differential casing in a differential housing to wheel shafts, the device comprising a source of hydraulic pressure, said source including a hydraulic pump, further comprising a hydraulic motor arranged in the differential gear mechanism, and means for controlling said hydraulic pressure supplied to the motor.

One of the known traction distribution devices is shown in the bulletin "Direct Yaw Control System" published by HONDA MOTOR, CO., LTD. on May 29, 1996.

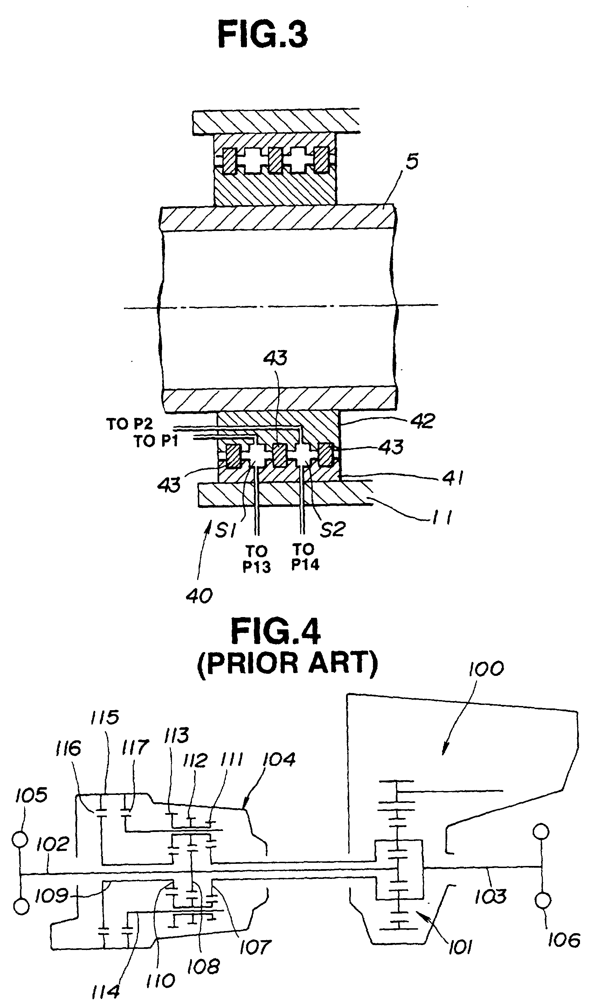

FIG. 4 shows a drive system including such traction distribution device. A transmission 100 includes a differential-gear mechanism 101 which serves to equally distribute traction to shafts 103, 102 of right and left wheels 106, 105. A unit 104 is mounted to the left-wheel shaft 102 to ensure active control of the rate of distribution of traction with regard to the wheel shafts 103, 102. Disposed coaxially in the unit 104 are a right sun gear 107 mounted to the right-wheel shaft 103, a central sun gear 108 mounted to the left-wheel shaft 102, a left sun gear 110 mounted to a sun-gear shaft 109, and a carrier 114 for rotatably supporting pinions 111, 112, 113 integrated therewith. The pinions 111, 112, 113 are engaged with the sun gears 107, 108, 110, respectively, to be capable of revolving on their axis and therearound. A right-cornering clutch 117 is interposed between the carrier 114 and a casing 115 of the unit 104, whereas a left-cornering clutch 116 is interposed between the sun-gear shaft 109 and the casing 115.

When the vehicle corners right, the right-cornering clutch 117 fixes the carrier 114 so that a transmission system including the sun gear 107, the pinions 111, 112, and the sun gear 108 increases the rotating speed of the left-wheel shaft 102 with respect to that of the right-wheel shaft 103. It is understood that active control of the rate of distribution of traction with regard to the right- and left-wheel shafts 103, 102 contributes to an improvement in the cornering performance, etc. of the vehicle.

With the known traction distribution device, however, active control of the rate of distribution of traction with regard to the right- and left-wheel shafts 103, 102 is ensured by switching of complicated gear trains, resulting in inevitable increase in size, weight, and manufacturing cost of the device.

A traction distribution device of the above mentioned type of the invention is known from US-A-4 974 471. The known device, as shown in US-A-4 974 471 Fig. 4, comprises one input and one output shaft on a common axis through the rotatable casing. Two hydraulic pumps in the casing are driven by opposed differential pinion gears in response to relative rotation between the two shafts. The flow of hydraulic fluid provided by the two pumps can be used to drive a hydraulic motor connected to the output shaft via spur gears. This renders the transmission of rotational motion from the input shaft to the output shaft variable, the maximum transmitted rotational speed being the speed of the input speed.
All the embodiments of US-A-4 974 471 comprise either a pair of hydraulic pumps or a pair of hydraulic motors in the differential casing. In the case of pumps, these always operate in response to relative rotational speed between two opposing wheel shafts, while in the case of a pair of motors, these motors are operated by an extemal pump and act on the relative rotational speed between the two shafts.

Another differential gear mechanism is known from US-A-5 127 888. In a rotatable carrier, which has an input shaft and two output shafts, four gear pumps are defined, which drive oil in a hydraulic circuit, their discharge pressure being regulated in order to restrict the speed difference between the two output shafts.

It is an object of the present invention to provide traction distribution devices of the above-mentioned type which contribute to a reduction in size, weight, and manufacturing cost, while permitting a well-controlled distribution of traction to two wheel shafts.

### SUMMARY OF THE INVENTION

According to the present invention, this object is solved with a traction distribution device for a motor vehicle with a differential-gear mechanism for transmitting torque of a tumable differential casing, which is arranged in a stationary differential housing, to wheel shafts, the device comprising a source of hydraulic pressure, said source including a hydraulic pump, further comprising a hydraulic motor arranged in the differential gear mechanism, and means for controlling said hydraulic pressure supplied to the motor, the device being characterized by
said hydraulic pump being arranged such that it produces said hydraulic pressure in dependency on torque between said differential casing and said differential housing;
said motor providing relative torque between one of the wheel shafts and the differential casing in accordance with a direction of said hydraulic pressure supplied thereto; and
means for switching said direction of said hydraulic pressure supplied to said motor.
FIG. 1 is a schematic view, partly in section, showing a first embodiment of a traction distribution device according to the present invention;
FIG. 2 is a view similar to FIG. 1, showing the trochoid motor and the trochoid pump
FIG. 3 is a longitudinal section showing a rotary joint;
FIG. 4 is a skeleton diagram showing a drive system including a known traction distribution device;
FIG. 5 is a schematic side view showing a reservoir formed in a differential casing;
FIG. 6 is a view similar to FIG. 1, showing a second embodiment of the present invention;
FIG. 7 is a view similar to FIG. 2, showing the trochoid motor and the trochoid pump;
FIG. 8 is a view similar to FIG. 5, showing the reservoir formed in the differential casing;
FIG. 9 is a view similar to FIG. 6, showing a third embodiment of the present invention;
FIG. 10 is showing a differential-gear mechanism;
FIG. 11 is a view similar to FIG. 10, showing a hydraulic control system for a hydraulic-piston motor and a hydraulic-piston pump; and
FIG. 12 is a view similar to FIG. 11, showing a fourth embodiment of the present invention.

### DETAILED DESCRIPTION OF THE INVENTION

Referring to the drawings wherein like reference numerals designate like parts throughout the views, a traction distribution device embodying the present invention will be described.

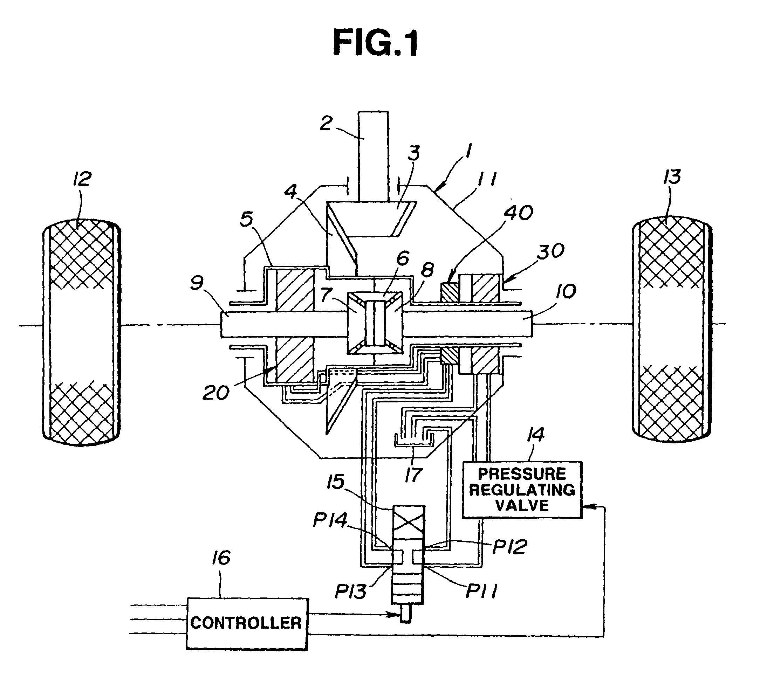

FIGS. 1-3 and 5 show a first embodiment of the present invention. Referring to FIG. 1, a motor vehicle includes a differential-gear mechanism 1 which has a similar fundamental structure to that of the conventional one such that torque of a propeller shaft 2 is transmitted to a differential casing 5 through a small reduction gear 3 and a large reduction gear 4, which is then equally distributed to shafts 10, 9 of right and left wheels 13, 12 through a small differential gear 6 and large differential gears 8, 7. Rotation of the small differential gear 6 serves to absorb the difference in the number of revolutions of the right- and left-wheel shafts 10, 9. 11 designates a differential housing as a main body of the differential-gear mechanism 1.

A traction distribution device comprises a trochoid motor 20 as a hydraulic motor which can provide relative torque between the left-wheel shaft 9 and the differential casing 5, a trochoid pump 30 as a hydraulic pump which produces a hydraulic pressure by rotation of the differential casing 5.

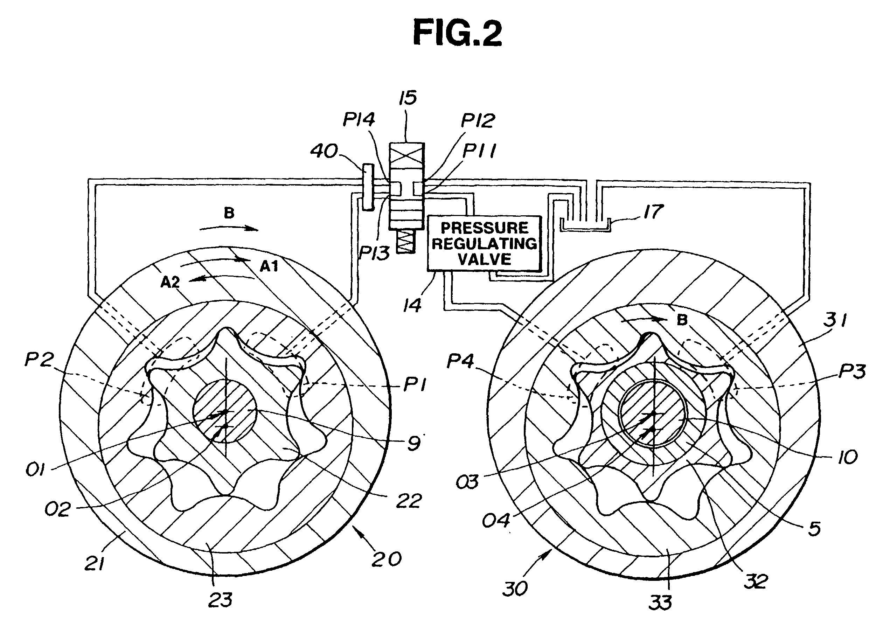

Referring to FIG. 2, the motor 20 comprises in a body 21 an inner trochoid rotor 22 and an outer trochoid rotor 23 rotatably engaged therewith. The body 21 is engaged with the inner side of the differential casing 5, and the inner trochoid rotor 22 is engaged with the left-wheel shaft 9. O1 designates a center of rotation of the left-wheel shaft 9 and the inner trochoid rotor 22, and O2 designates a center of rotation of the outer trochoid rotor 23. Thus, when inhaling hydraulic fluid through a port P1, the rotors 22, 23 are rotated in the direction of arrow A1, whereas when inhaling hydraulic fluid through a port P2, the rotors 22, 23 are rotated in the direction of arrow A2. Moreover, hydraulic fluid is discharged from the port P2 during rotation of the rotors 22, 23 in the direction of arrow A1, whereas it is discharged from the port P1 during rotation thereof in the direction of arrow A2.

In the similar way to the motor 20, the pump 30 comprises in a body 31 an inner trochoid rotor 32 and an outer trochoid rotor 33 rotatably engaged therewith. The body 31 is engaged with the inner side of the differential housing 11, and the inner trochoid rotor 32 is engaged with the differential casing 5. O3 designates a center of rotation of the differential casing 5 and the right-wheel shaft 10 and the inner trochoid rotor 32, and O4 designates a center of rotation of the outer trochoid rotor 33. Thus, when the differential casing 5 is rotated with the inner trochoid rotor 32 in the direction of arrow B, hydraulic fluid is inhaled in the pump 30 through an inlet port P3, which is discharged therefrom through an outlet port P4.

Hydraulic fluid discharged from the outlet port P4 is adjusted in pressure by a pressure regulating valve 14 as hydraulic-pressure controlling means, which is then supplied to a selector valve 15 as switching means. The pressure regulating valve 14 serves to adjust a pressure of hydraulic fluid in accordance with a control signal derived from a controller 16 to discharge relieved hydraulic fluid to a reservoir 17. The reservoir 17 may be in the form of a receiver arranged to the bottom of the differential-gear mechanism 1 to receive hydraulic fluid as lubricating oil. The reservoir 17 communicates with the inlet port P3 of the pump 30.

The selector valve 15 includes a 4-port 3-position selector valve which is controlled by the controller 16 to give a first, second, or third state in accordance with a switched position. Referring to FIGS. 1-2, the first state is such that inlet ports P11, P12 communicate with each other, and outlet ports P13, P14 communicate with each other . The second state is such that the inlet ports P11 communicates with the outlet port P13, and the inlet port P12 communicates with the outlet port P14. The third state is such that the inlet port P11 communicates with the outlet port P14, and the inlet port P12 communicates with the outlet port P13. The inlet port P11 communicates with the pressure regulating valve 14, and the inlet port P12 communicates with the reservoir 17. The outlet ports P13, P14 communicate with the ports P1, P2 of the motor 20, respectively.

A rotary joint 40 is arranged in a hydraulic passage between the motor 20 on the side of the differential casing 5 or the rotative side and the selector valve 15 on the differential housing 11 or the stationary side. Referring to FIG. 3, the rotary joint 40 has an annular spaces S1, S2 formed, by seals 43, between a body 41 on the side of the differential housing 11 and a rotary member 42 on the side of the differential casing 5. Regardless of relative rotation of the differential casing 5 and the differential housing 11, the spaces S1, S2 serve as a communication passage between the ports P1, P2 of the motor 20 and the outlet ports P13, P14 of the selector valve 15. In view of rotation balance, it is advantageous that hydraulic passages between the rotary joint 40 and the motor 20 are arranged symmetrically with respect to the a rotation axis of the differential casing 5. Rotation balance may be ensured by using a balance weight. When, as described above, the reservoir 17 is in the form of a receiver arranged to the bottom of the differential-gear mechanism 1 to receive a predetermined amount of hydraulic fluid as lubricating oil, the receiver allows leaked hydraulic fluid from the seals 43 of the rotary joint 40, resulting in not only simplified structure of the rotary joint 40, but improved durability thereof and heat radiation of hydraulic fluid.

Next, the operation of the first embodiment will be described.

Since the pump 30 is driven by rotation of the differential casing 5, the discharge of hydraulic fluid is proportional to the vehicular speed.

When the selector valve 15 is in the first state as shown in FIGS. 1-2, hydraulic fluid discharged from the pump 30 is discharged to the reservoir 17 through the inlet ports P11, P12, so that the operating resistance of the pump 30 is restrained at a smaller value. Moreover, in the first state, the outlet ports P13, P14 are in communication, so that free rotation of the motor 20 is allowed.

When the selector valve 15 is switched to the second state or the state that the ports P11, P13 are in communication, and the ports P12, P14 are in communication, hydraulic fluid from the pump 30 is inhaled in the motor 20 through the port P1 to rotate the rotors 22, 23 in the direction of arrow A1 which corresponds to the direction of arrow B of the differential casing 5 as shown in FIG. 2. Thus, the left-wheel shaft 9 on the side of the rotor 22 is forcedly rotated in the direction of arrow A1 or the direction of increased rotating speed with respect to the differential casing 5 on the side of the body 21. A relative rotation between the two serves to increase the rotating speed of the left-wheel shaft 9, and decrease that of the right-wheel shaft 10. The rate of increased and decreased rotating speed of the wheel shafts 9, 10, i.e. the rate of distribution of traction with regard thereto, can be adjusted by the pressure regulating valve 14.

On the other hand, when the selector valve 15 is switched to the third state or the state that the ports P11, P14 are in communication, and the ports P12, P13 are in communication, hydraulic fluid from the pump 30 is inhaled in the motor through the port P2 to rotate the rotors 22, 23 in the direction of arrow A2 which is opposite to the direction of arrow B of the differential casing 5 as shown in FIG. 2. Thus, the left-wheel shaft 9 on the side of the rotor 22 is forcedly rotated in the direction of arrow A2 or the direction of decreased rotating speed with respect to the differential casing 5 on the side of the body 21. A relative rotation between the two serves to decrease the rotating speed of the left-wheel shaft 9, and increase that of the right-wheel shaft 10. The rate of decreased and increased rotating speed of the wheel shafts 9, 10, i.e. the rate of distribution of traction with regard thereto, can be adjusted by the pressure regulating valve 14.

It is understood that forced rotation of the left-wheel shaft 9 in the direction of arrow A1 or A2 with respect to the differential casing 5 serves to increases the rotation speed of one of the right- and left-wheel shafts 10, 9, and decrease that of the other.

By way of a concrete example, suppose that the ratio of the characteristic discharge of hydraulic fluid of the pump 30 per rotation to that of the motor 20 per rotation is 1 : 1, and that the maximum rotating speed of the motor 20 is 1/10 that of the pump 30. Here, when the selector valve 15 is switched to the second state to increase the rotating speed of the left-wheel shaft 9 and decrease that of the right-wheel shaft 10, the maximum rotating speed of the left-wheel shaft 9 is 1.1 x V, and the minimum rotating speed of the right-wheel shaft 10 is 0.9 x V where V is a rotating speed when rotating the right- and left-wheel shafts 10, 9 at the same speed, which corresponds to the vehicular speed. Of course, the rotating speeds of the wheel shafts 10, 9 can relevantly continuously be controlled by the pressure regulating valve 14 such that the control range of the rotating speed is between V and 1.1 x V with regard to the left-wheel shaft 9, and between 0.9 x V and V with regard to the right-wheel shaft 10. On the other hand, when the selector valve 15 is switched to the third state to decrease the rotating speed of the left-wheel shaft 9 and increase that of the right-wheel shaft 10, the minimum rotating speed of the left-wheel shaft 9 is 0.9 x V, and the maximum rotating speed of the right-wheel shaft 10 is 1.1 x V. Of course, the rotating speeds of the wheel shafts 10, 9 can relevantly continuously be controlled by the pressure regulating valve 14 such that the control range of the rotating speed is between 0.9 x V and V with regard to the left-wheel shaft 9, and between V and 1.1 x V with regard to the right-wheel shaft 10.

It is understood that the pressure regulating valve 14 and the selector valve 15 controlled by the controller 16 in accordance with the cruising state of the vehicle such as cornering allow active control of the rate of distribution of traction with regard to the right- and left-wheel shafts 10, 9, ensuring excellent cruising performance of the vehicle upon cornering, etc. In order to achieve such control, the controller 16 is relied, for example, upon input information or signals detected by a vehicular-speed sensor, a steering-angle sensor, a lateral G sensor, a yaw sensor, etc. Moreover, the discharge of the pump 30 is proportional to the vehicular speed, so that in all the vehicular-speed range, the discharge of the pump 30 can correspond to the maximum required amount of hydraulic fluid of the motor 20. Therefore, the required amount of hydraulic fluid can automatically be ensured in accordance with the vehicular speed, resulting in improved control-ability of the vehicle.

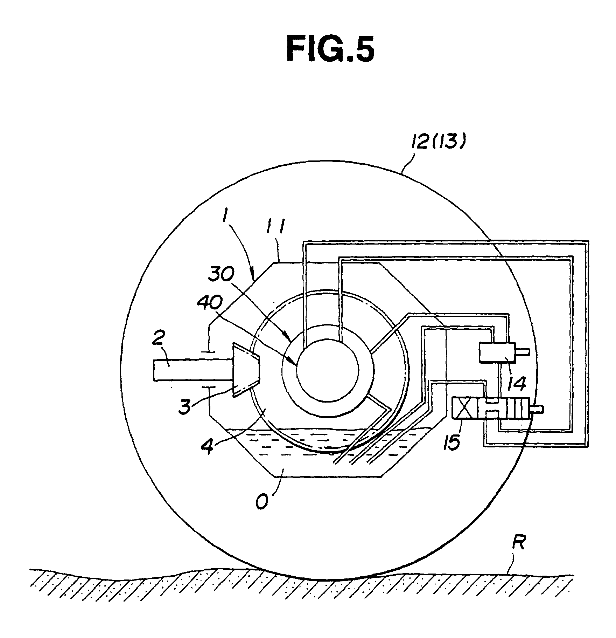

Referring to FIG. 5, the reservoir 17 is in the form of a hydraulic-fluid receiver of the differential housing 11. Hydraulic fluid O within the differential housing 11 is supplied to the motor 20 by the pump 30. In FIG. 5, R designates a road. The use of a portion of the differential housing 11 where hydraulic fluid O is accumulated as the reservoir 17 enables simplified structure of the device.

It is noted that the motor 20 and the pump 30 may not be of the trochoid type, but of other type. Moreover, the pump 30 is not necessarily be arranged in the differential-gear mechanism 1, and may be replaced with other supply source of hydraulic fluid.

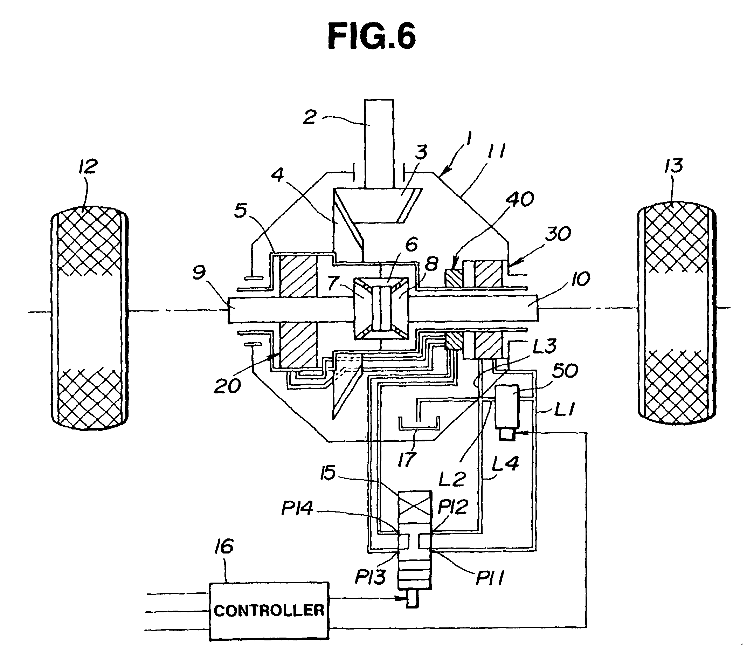

FIGS. 6-8 show a second embodiment of the present invention wherein in place of the pressure regulating valve 14 in the first embodiment, a control-type relief valve 50 serves as hydraulic-fluid controlling means.

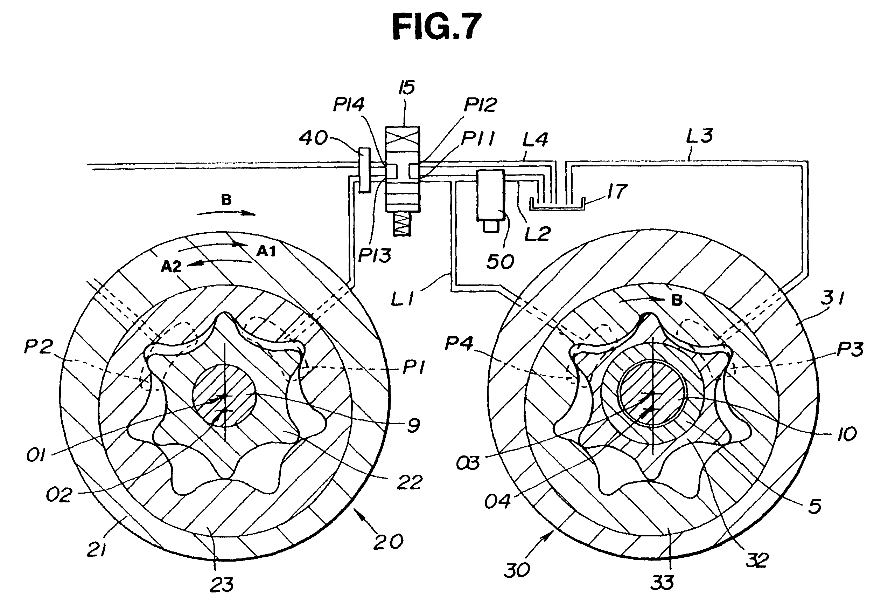

Referring to FIG. 7, the relief valve 50 is arranged between a supply passage L1 between the outlet port P4 of the pump 30 and the inlet port P 11 of the selector valve 15 and a relief passage L2 communicating with the reservoir 17. Referring to FIG. 6, the relief passage L2 may be connected to a passage L3 between the inlet port P3 and the reservoir 17 and a passage L4 between the inlet port P12 and the reservoir 17. In the similar way to the pressure regulating valve 14, the relief valve 50 serves to adjust a pressure of hydraulic fluid supplied to the inlet pot P11 in accordance with a control signal derived from the controller 16 to discharge relieved hydraulic fluid to the reservoir 17. Specifically, the relief valve 50 serves to reduce a hydraulic pressure within the supply passage L1, and return hydraulic fluid corresponding to the reduced pressure from the relief passage L2 to the reservoir 17 for circulation. This results in a reduction in a load of the pump 30 by the reduced pressure within the supply passage L1. Therefore, a temperature rise of hydraulic fluid and an increase in fuel consumption of the vehicle are restrained compared with the case using the pressure regulating valve 14 as in the first embodiment, i.e. the case of decreasing an output pressure of the inlet port P11 without reducing an input pressure of the outlet port P4.

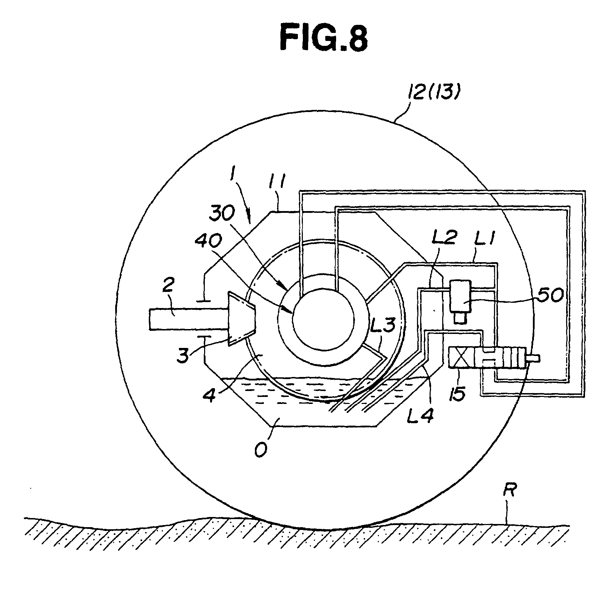

Referring to FIG. 8, the reservoir 17 is in the form of a hydraulic-fluid receiver of the differential housing 11. Hydraulic fluid O within the differential housing 11 is supplied to the motor 20 by the pump 30.

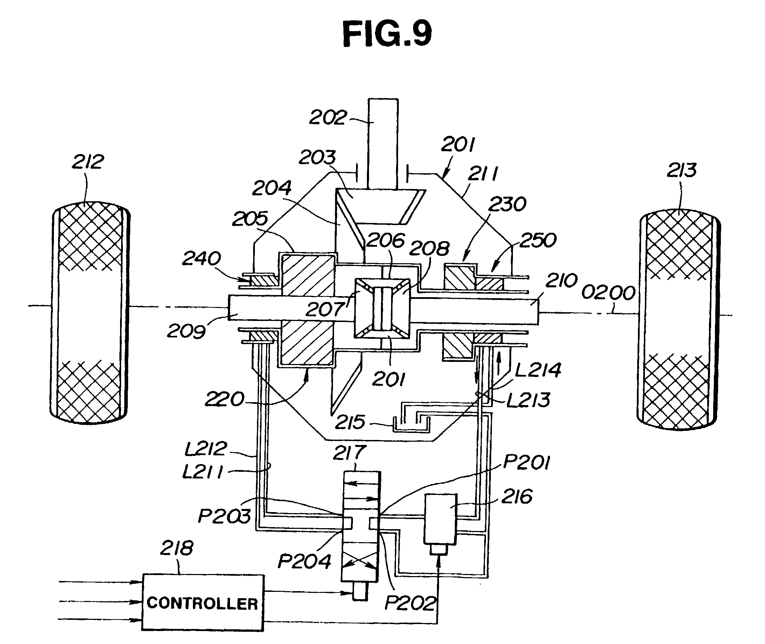

FIGS. 9-11 show a third embodiment of the present invention. Referring to FIG. 9, a motor vehicle includes a differential-gear mechanism 201 which has a similar fundamental structure to that of the conventional one such that torque of a propeller shaft 202 is transmitted to a differential casing 205 through a small reduction gear 203 and a large reduction gear 204, which is then equally distributed to shafts 210, 209 of right and left wheels 213, 212 through a small differential gear 206 and large differential gears 208, 207. Rotation of the small differential gear 206 serves to absorb the difference in the number of revolutions of the right- and left-wheel shafts 210, 209. 211 designates a differential housing as a main body of the differential-gear mechanism 201.

A traction distribution device comprises a hydraulic-piston motor 220 which can provide relative torque between the left-wheel shaft 209 and the differential casing 205, a hydraulic-piston pump 230 which produces a hydraulic pressure by rotation of the differential casing 205.

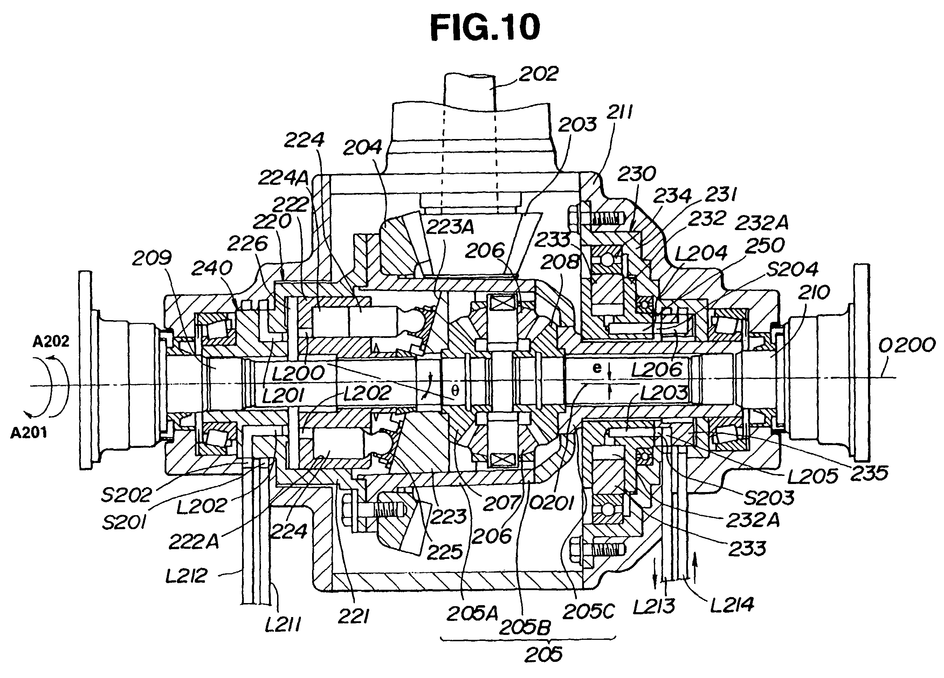

FIG. 10 shows the differential-gear mechanism 201 including the motor 220 and the pump 230. The differential casing 205 comprises first, second, and third component parts 205A, 205B, 205C connected each other. Connected to the first component part 205A is a piston-motor housing 221 which constitutes the motor 220. The motor 220 includes an axial piston motor, whereas the pump 230 includes a radial piston pump.

The axial piston motor 220 is of the so-called cam-plate type including a cam plate 223 opposite to a cylinder block 222. The cylinder block 222 is engaged with the outer periphery of the wheel shaft 209 to be rotatable with respect to the motor housing 221. The cam plate 223 is fixed to the inner periphery of the differential casing 205 to be rotatable with respect to the wheel shaft 209. Cylinder chambers 222A having openings on the right side as viewed in FIG. 10 are equidistantly formed on the same circumference of the cylinder block 222, each having therein a piston 224 which is longitudinally protrusible as viewed in FIG. 10. A ring-like piston shoe 225 is mounted on an inclined face 223A of the cam plate 223 to slidably guide a spherical head of the piston 224. In FIG. 10, θ designates an angle of inclination of the cam plate 223.

A valve plate 226 is mounted to the cylinder block 222. The valve plate 226 serves to form a hydraulic circuit interposed between a passage L200 of the cylinder block 222 which communicates with the cylinder chambers 222A and first and second passages L201, L202 of the motor housing 221 so as to change the direction of rotation of the motor 220 in accordance with whether hydraulic fluid is supplied from the first passage L201 or the second passage L202. Specifically, when hydraulic fluid is supplied from the first passage L201, the cylinder block 222 is rotated in one direction as indicated by arrow A201 with respect to the cam plate 223, whereas when hydraulic fluid is supplied from the second passage L202, the cylinder block 222 is rotated in another direction as indicated by arrow A202 with respect to the cam plate 223.

A rotary joint 240 is arranged to opposed portions of the motor housing 221 and the differential housing 211. Specifically, annular spaces S201, S202 are formed in the inner periphery of the differential housing 211, and the first passage L201 of the motor housing 221 has an opening opposite to the space S201, and the second passage L202 has an opening opposite to the space S202. Regardless of rotation of the motor housing 221, the space S201 serves to ensure communication between a duct L211 and the passage L201, and the space S202 serves to ensure communication between a duct L212 and the second passage L202.

The radial piston pump 230 is arranged between the pump housing 231 fixed to the differential housing 211 and the differential casing 205, and is of the so-called rotary-cylinder type including a rotating cylinder block 232. The cylinder block 232 is engaged with the outer periphery of the differential casing 205, in which cylinder chambers 232A having openings on the outer radial side are equidistantly circumferentially formed. Each cylinder chamber 232A has therein a piston 233 which is protrusible radially. An eccentric cam ring 234 which a head of the piston 233 inscribes is rotatably mounted to the inner periphery of the pump housing 231 to be rotatable about an axis O201. The cam ring 234 serves to drive the piston 233 in accordance with rotation of the cylinder block 232 to vary the volume of the cylinder chamber 232A. In FIG. 10, e designates an eccentric amount of the axis O201 with respect to the wheel shafts 10, 9 and a rotation axis O200 of the differential casing 205. A discharge passage L203 and a supply passage L204 are formed in the cylinder block 232.

A valve body 235 is mounted to the cylinder block 232. The valve body 235 and the pump housing 231 constitute a rotary valve 250. Specifically, substantially semicircular spaces S203, S204 are formed in the inner periphery of the pump housing 231 to be 180° offset each other. A passage L205 of the valve body 235 which communicates with the discharge passage L203 has an opening opposite to the space S203, whereas a passage L206 of the valve body 235 which communicates with the supply passage L204 has an opening opposite to the space S204. The rotary valve 250 constructed in such a way discharges hydraulic fluid within the cylinder chamber 232A having the volume decreased with rotation of the cylinder block 232 in the direction of arrow A201 to a duct L213 through the passages L203, L205 and the space S203, and it inhales hydraulic fluid within a reservoir 215 (see FIG. 9) into the cylinder chamber 232A having the volume increased with rotation of the cylinder block 232A in the direction of arrow A201 through the passages L204, L206, the space S204, and a duct L214. The reservoir 215 may be a receiver arranged to the bottom of the differential-gear mechanism 201 to receive a predetermined hydraulic fluid as lubricating oil.

Hydraulic fluid discharged from the pump 230 through the duct L213 is adjusted in pressure by a pressure regulating valve 216 as hydraulic-pressure controlling means, which is then supplied to a selector valve 217 as switching means. The pressure regulating valve 216 serves to adjust a pressure of hydraulic fluid in accordance with a control signal derived from a controller 218 to discharge relieved hydraulic fluid to the reservoir 215.

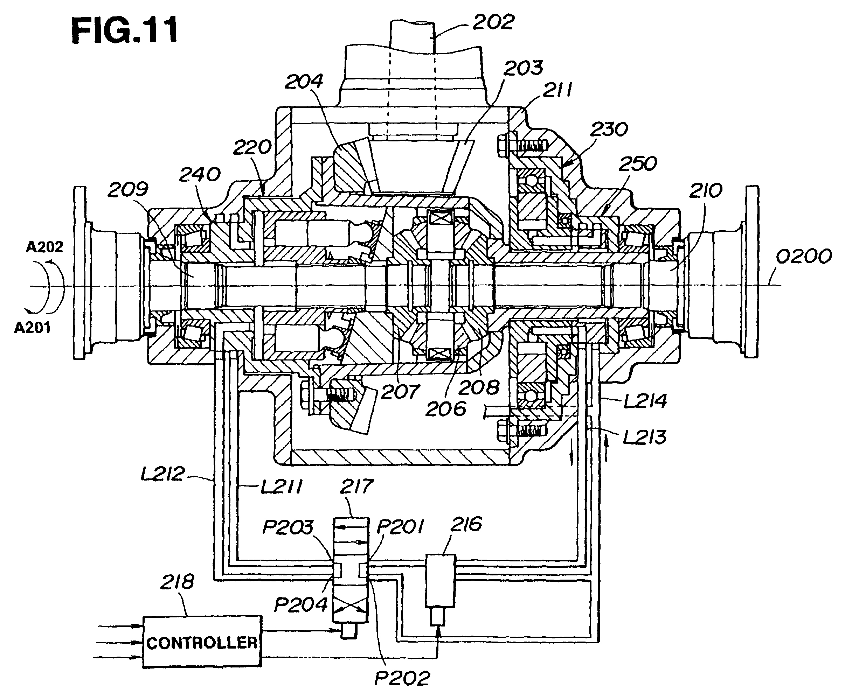

The selector valve 217 includes a 4-port 3-position selector valve which is controlled by the controller 218 to give a first, second, or third state in accordance with a switched position. Referring to FIGS. 9 and 11, the first state is such that inlet ports P201, P202 communicate with each other, and outlet ports P203, P204 communicate with each other. The second state is such that the inlet ports P201 communicates with the outlet port P203, and the inlet port P202 communicates with the outlet port P204. The third state is such that the inlet port P201 communicates with the outlet port P204, and the inlet port P202 communicates with the outlet port P203. The inlet port P201 communicates with the pressure regulating valve 216, and the inlet port P202 communicates with the reservoir 215. The outlet ports P203, P204 are connected to the ducts L211, L212 of the motor 220, respectively. The inlet port P202 of the selector valve 217 and a port of the pressure regulating valve 216 for discharging relieved hydraulic fluid may be connected to the duct L214 as shown in FIG. 11.

Next, the operation of the third embodiment will be described.

since the pump 230 is driven by rotation of the differential casing 205 in the direction of arrow A201 in FIG. 10, the discharge of hydraulic fluid is proportional to the vehicular speed.

When the selector valve 217 is in the first state as shown in FIGS. 9 and 11, hydraulic fluid discharged from the pump 230 is discharged to the reservoir 215 through the inlet ports P201, P202, so that the operating resistance of the pump 230 is restrained at a smaller value. Moreover, in the first state, the outlet ports P203, P204 are in communication, so that free rotation of the motor 220 is allowed.

When the selector valve 217 is switched to the second state or the state that the ports P201, P203 are in communication, and the ports P202, P204 are in communication, hydraulic fluid from the pump 230 is inhaled in the motor 220 through the duct L211 to rotate the cylinder block 222 on the side of the wheel shaft 209 in the direction of arrow A201 as shown in FIG. 10 with respect to the cam plate 223 on the side of the differential casing 205. That is, the wheel shaft 209 is rotated in the direction of arrow A201 which corresponds to the direction of rotation of the differential casing 205. Thus, the left-wheel shaft 209 is forcedly rotated in the direction of arrow A201 or the direction of increased rotating speed with respect to the differential casing 205. A relative rotation between the two serves to increase the rotating speed of the left-wheel shaft 209, and decrease that of the right-wheel shaft 210. The rate of increased and decreased rotating speed of the wheel shafts 209, 210, i.e. the rate of distribution of traction with regard thereto, can be adjusted by the pressure regulating valve 216.

On the other hand, when the selector valve 217 is switched to the third state or the state that the ports P201, P204 are in communication, and the ports P202, P203 are in communication, hydraulic fluid from the pump 230 is inhaled in the motor 220 through the duct 212 to rotate the cylinder block 222 on the wheel shaft 209 in the direction of arrow A202 as shown in FIG. 10 with respect to the cam plate 223 on the differential casing 205. That is, the wheel shaft 209 is rotated in the direction of arrow A202 which is opposite to the direction of rotation of the differential casing 205. Thus, the left-wheel shaft 209 is forcedly rotated in the direction of arrow A202 or the direction of decreased rotating speed with respect to the differential casing 205. A relative rotation between the two serves to decrease the rotating speed of the left-wheel shaft 209, and increase that of the right-wheel shaft 210. The rate of decreased and increased rotating speed of the wheel shafts 209, 210, i.e. the rate of distribution of traction with regard thereto, can be adjusted by the pressure regulating valve 216.

It is understood that forced rotation of the left-wheel shaft 209 in the direction of arrow A201 or A202 with respect to the differential casing 205 serves to increases the rotation speed of one of the right- and left-wheel shafts 210, 209, and decrease that of the other. The rotating speeds of the right- and left-wheel shafts 210, 209 can relevantly continuously be controlled by the pressure regulating valve 216.

It is also understood that the pressure regulating valve 216 and the selector valve 217 controlled by the controller 218 in accordance with the cruising state of the vehicle such as cornering allow active control of the rate of distribution of traction with regard to the right-and left-wheel shafts 210, 209, ensuring excellent cruising performance of the vehicle upon cornering, etc. In order to achieve such control, the controller 218 is relied, for example, upon input information or signals detected by a vehicular-speed sensor, a steering-angle sensor, a lateral G sensor, a yaw sensor, etc. Moreover, the discharge of the pump 230 is proportional to the vehicular speed, so that in all the vehicular-speed range, the discharge of the pump 230 can correspond to the maximum required amount of hydraulic fluid of the motor 220. Therefore, the required amount of hydraulic fluid can automatically be ensured in accordance with the vehicular speed, resulting in improved control-ability of the vehicle.

It is also understood that the use of the motor 220 and the pump 230 of the piston type enables restrained leakage of hydraulic fluid, and thus achievement of highly pressurized hydraulic fluid of, e.g. 30 Mps, resulting in improved control-ability of the vehicle. It is noted that the motor 20 and the pump 30 of the trochoid type produce a greater leakage of hydraulic fluid, which makes high pressurization of hydraulic fluid difficult, attaining 10 Mps at the best.

It is noted that the motor 220 and the pump 230 only need to be of the piston type, and various combinations are possible in addition to combination of an axial piston pump and a radial piston pump in the third embodiment such as combination of an axial piston motor and an axial piston pump, that of a radial piston motor and a radial piston pump, and that of a radial piston motor and an axial piston pump. Moreover, the pump 230 is not necessarily be arranged in the differential-gear mechanism 201, and may be replaced with other supply source of hydraulic fluid.

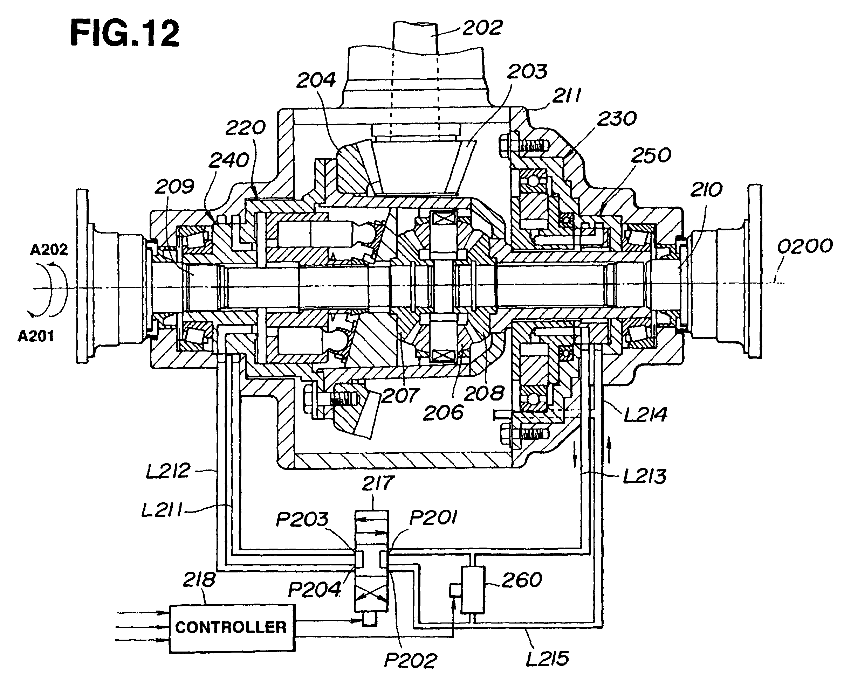

FIG. 12 shows a fourth embodiment of the present invention wherein in place of the pressure regulating valve 216 in the third embodiment a control-type relief valve 260 serves as hydraulic-pressure controlling means.

Referring to FIG. 12, the relief valve 260 is arranged between the duct L213 and a relief passage L215 communicating with the reservoir 215. In the similar way to the pressure regulating valve 216, the relief valve 260 serves to adjust a pressure of hydraulic fluid supplied to the inlet port P201 in accordance with a control signal derived from the controller 218 to discharge relieved hydraulic fluid to the reservoir 215. Specifically, the relief valve 260 serves to reduce a hydraulic pressure within the duct L213, and return hydraulic fluid corresponding to the reduced pressure from the relief passage L215 to the reservoir 215 for circulation. This results in a reduction in a load of the pump 230 by the reduced pressure within the duct L213. Therefore, a temperature rise of hydraulic fluid and an increase in fuel consumption of the vehicle are restrained compared with the case using the pressure regulating valve 216 as in the third embodiment, i.e. the case of decreasing an output pressure of the inlet port P201 without reducing an input pressure of the duct L213.

## Claims

1. A traction distribution device for a motor vehicle with a differential-gear mechanism (1) for transmitting torque of a turnable differential casing (5), which is arranged in a stationary differential housing (11), to wheel shafts (9, 10), the device comprising a source of hydraulic pressure, said source including a hydraulic pump (30), further comprising a hydraulic motor (20) arranged in the differential gear mechanism (1), and means (14) for controlling said hydraulic pressure supplied to the motor, the device being **characterized by**
said hydraulic pump (30) being arranged such that it produces said hydraulic pressure in dependency on torque between said differential casing (5) and said differential housing (11);
said motor (20) providing relative torque between one of the wheel shafts (9) and the differential casing (5) in accordance with a direction of said hydraulic pressure supplied thereto; and
means (15) for switching said direction of said hydraulic pressure supplied to said motor (20).

2. A traction distribution device as claimed in claim 1, wherein said hydraulic pump includes a trochoid pump (30).

3. A traction distribution device as claimed in claim 2, wherein said trochoid pump (30) comprises a shell portion (33) and a core portion (32) which produce said hydraulic pressure by relative rotation therebetween, said shell portion being connected to a housing (11) of the differential-gear mechanism, said core portion being connected to the differential casing (5).

4. A traction distribution device as claimed in claim 1, wherein said hydraulic pump includes a piston pump (230).

5. A traction distribution device as claimed in claim 4, wherein said piston pump includes a radial-piston pump (230) comprising a cylinder block (232) and a cam plate (234) which produce relative rotation in accordance with the differential casing (205) and a housing (211) of the differential-gear mechanism.

6. A traction distribution device as claimed in claim 4, wherein said piston pump includes an axial-piston pump.

7. A traction distribution device as claimed in one of claims 1 to 6, wherein said hydraulic motor includes a trochoid motors (20).

8. A traction distribution device as claimed in claim 7, wherein said trochoid motor (20) comprises a shell portion (23) and a core portion (22) which produce relative rotation in accordance with said direction of said hydraulic pressure, said shell portion being connected to the differential casing (5), said core portion being connected to said one of the wheel shafts (9,10).

9. A traction distribution device as claimed in one of claims 1 to 6, wherein said hydraulic motor includes a piston motor (220).

10. A traction distribution device as claimed in claim 9, wherein said piston motor includes an axial-piston motor (220) comprising a cylinder block (222) and a cam plate (223) which produce relative rotation in accordance with said direction of hydraulic pressure.

11. A traction distribution device as claimed in claim 9, wherein said piston motor includes a radial-piston motor.

12. A traction distribution device as claimed in one of claims 1 to 11, wherein said controlling means include a pressure regulating valve (14).

13. A traction distribution device as claimed in one of claims 1 to 11, wherein said controlling means include a relief valve (50).

14. A traction distribution device as claimed in one of claims 1 to 13, wherein said switching means include a selector valve (15).

## Patentansprüche

1. Traktionsverteilervorrichtung für ein Motorfahrzeug mit einer Differentialgetriebevorrichtung (1) zur Drehmomentübertragung eines drehbaren Differentialgehäuses (5), das in einem stationären Differentialgehäuse (11) angeordnet ist, an Radwellen (9, 10), wobei die Vorrichtung aufweist eine hydraulische Druckquelle, wobei die Quelle eine hydraulische Pumpe (30) enthält, außerdem aufweist einen Hydraulikmotor (20), angeordnet in der Differentialgetriebevorrichtung (1), und eine Einrichtung (14) zum Steuem des zu dem Motor zugeführten Hydraulikdruckes, wobei die Vorrichtung
**gekennzeichnet ist dadurch,**
daß die hydraulische Pumpe (30) so angeordnet ist, daß sie den Hydraukikdruck in Abhängigkeit vom Drehmoment zwischen dem drehbaren Differentialgehäuse (5) und dem Differentialgehäuse (11) erzeugt;
der Motor (20) ein relatives Drehmoment zwischen einer der Radwellen (9) und dem Differentialgehäuse (5) in Übereinstimmung mit einer Richtung des dazu zugeführten Hydraulikdruckes schafft; und
eine Einrichtungen (15) zum Schalten der Richtung des zu dem Motor (20) zugeführten Hydraulikdruckes.

2. Traktionsverteilervorrichtung nach Anspruch 1, wobei die Hydraulikpumpe eine Trochoidpumpe (30) enthält.

3. Traktionsverteilervorrichtung nach Anspruch 2, wobei die Trochoidpumpe (30) einen Schalenabschnitt (33) und einen Kernabschnitt (32) aufweist, die den Hydraulikdruck durch relative Drehung zwischen ihnen erzeugen, wobei der Schalenabschnitt (33) mit einem Gehäuse (11) der Differentialgetriebevorrichtung verbunden ist und der Kemabschnitt mit dem Differentialgehäuse (5) verbunden ist.

4. Traktionsverteilervorrichtung nach Anspruch 1, wobei die Hydraulikpumpe eine Kolbenpumpe (230) enthält.

5. Traktionsverteilervorrichtung nach Anspruch 4, wobei die Kolbenpumpe eine Radial-Kolbenpumpe (230)enthält, mit einem Zylinderblock (232) und einer Nockenplatte (234), die eine relative Drehung in Übereinstimmung mit dem Differentialgehäuse (205) und einem Gehäuse (211) der Differentialgetriebevorrichtung erzeugt.

6. Traktionsverteilervorrichtung nach Anspruch 4, wobei die Kolbenpumpe eine Axialkolbenpumpe enthält.

7. Traktionsverteilervorrichtung nach einem der Ansprüche 1 bis 6, wobei der Hydraulikmotor einen Trochoidmotor (20) enthält.

8. Traktionsverteilervorrichtung nach Anspruch 7, wobei der Trochoidmotor (20) einen Schalenabschnitt (23) und einen Kemabschnitt (22) aufweist, die eine relative Drehung in Übereinstimmung mit der Richtung des Hydraulikdruckes erzeugen, wobei der Schalenabschnitt mit dem Differentialgehäuse (5) verbunden ist und der Kemabschnitt mit einer der Radwellen (9, 10) verbunden ist.

9. Traktionsverteilervorrichtung nach einem der Ansprüche 1 bis 6, wobei der Hydraulikmotor einen Kolbenmotor (220) enthält.

10. Traktionsverteilervorrichtung nach Anspruch 9, wobei der Kolbenmotor einen Axial-Kolbenmotor (220) mit einem Zylinderblock (22) und einer Nockenplatte (223) enthält, die eine relative Drehung in Übereinstimmung mit der Richtung des Hydraulikdruckes erzeugen.

11. Traktionsverteilervorrichtung nach Anspruch 9, wobei der Kolbenmotor einen Radialkolbenmotor enthält.

12. Traktionsverteilervorrichtung nach einem der Ansprüche 1 bis 11, wobei die Steuereinrichtung ein Druckregulierungsventil (14) enthält.

13. Traktionsverteilervorrichtung nach einem der Ansprüche 1 bis 11, wobei die Steuereinrichtung ein Entlastungsventil (50) enthält.

14. Traktionsverteilervorrichtung nach einem der Ansprüche 1 bis 13, wobei die Schalteinrichtung ein Auswahlventil (15) enthält.

## Revendications

1. Dispositif de répartition des forces de traction pour un véhicule automobile avec un mécanisme formant engrenage différentiel (1) pour transmettre le couple d'un carter de différentiel tournant (5), qui est agencé dans un boîtier de différentiel stationnaire (11), à des arbres de roue (9, 10), le dispositif comprenant une source de pression hydraulique, ladite source incluant une pompe hydraulique (30), comprenant en outre un moteur hydraulique (20) agencé dans le mécanisme formant engrenage différentiel (1), et un moyen (14) pour commander ladite pression hydraulique fournie au moteur, le dispositif étant **caractérisé par** :
ladite pompe hydraulique (30) étant agencée de façon qu'elle produit ladite pression hydraulique en fonction du couple entre ledit carter de différentiel (5) et ledit boîtier de différentiel (11) ;
ledit moteur (20) fournissant un couple relatif entre l'un des arbres de roue (9) et le carter de différentiel (5) en accord avec une direction de ladite pression hydraulique fournie à celui-ci ; et
un moyen (15) pour commuter ladite direction de ladite pression hydraulique fournie audit moteur (20).

2. Dispositif de répartition des forces de traction selon la revendication 1, où ladite pompe hydraulique comporte une pompe trochoïdale (30).

3. Dispositif de répartition des forces de traction selon la revendication 2, où ladite pompe trochoïdale (30) comprend une portion de coque (33) et une portion de noyau (32) qui produisent ladite pression hydraulique par une rotation relative entre celles-ci, ladite portion de coque étant reliée à un boîtier (11) du mécanisme formant engrenage différentiel, ladite portion de noyau étant reliée au carter de différentiel (5).

4. Dispositif de répartition des forces de traction selon la revendication 1, où ladite pompe hydraulique comporte une pompe à piston (230).

5. Dispositif de répartition des forces de traction selon la revendication 4, où ladite pompe à piston comporte une pompe à piston radial (230) comprenant un bloc de cylindre (232) et une plaque de came (234) qui produisent une rotation relative en accord avec le carter de différentiel (205) et un boîtier (211) du mécanisme formant engrenage différentiel.

6. Dispositif de répartition des forces de traction selon la revendication 4, où ladite pompe à piston comporte une pompe à piston axial.

7. Dispositif de répartition des forces de traction selon l'une des revendications 1 à 6, où ledit moteur hydraulique comprend un moteur trochoidal (20).

8. Dispositif de répartition des forces de traction selon la revendication 7, où ledit moteur trochoïdal (20) comprend une portion de coque (23) et une portion de noyau (22) qui produisent une rotation relative en accord avec ladite direction de ladite pression hydraulique, ladite portion de coque étant reliée au carter de différentiel (5), ladite portion de noyau étant reliée à l'un desdits arbres de roue (9, 10).

9. Dispositif de répartition des forces de traction selon l'une des revendications 1 à 6, où ledit moteur hydraulique comporte un moteur à piston (220).

10. Dispositif de répartition des forces de traction selon la revendication 9, où ledit moteur à piston comporta un moteur à piston axial (220) comprenant un bloc de cylindre (222) et une plaque de came (223) qui produisent une rotation relative en accord avec ladite direction de pression hydraulique.

11. Dispositif de répartition des forces de traction selon la revendication 9, où ledit moteur à piston comporte un moteur à piston radial.

12. Dispositif de répartition des forces de traction selon l'une des revendications 1 à 11, où ledit moyen de commandc comprend une vanne de réglage de pression (14).

13. Dispositif de répartition des forces de traction selon l'une des revendications 1 à 11, où ledit moyen de commande comprend une vanne de surpression (50).

14. Dispositif de répartition des forces de traction selon l'une des revendications 1 à 13, où ledit moyen de commutation comprend une vanne de sélection (15).
